# EUROPEAN PATENT SPECIFICATION

(11) **EP 3 474 489 B1**
(45) Date of publication and mention of the grant of the patent: **20.05.2020**
(21) Application number: 17196825.8
(22) Date of filing: 17.10.2017
(51) Int. Cl.: H04L 12/24, H04L 12/26

(54) **A METHOD AND A SYSTEM TO ENABLE A (RE-)CONFIGURATION OF A TELECOMMUNICATIONS NETWORK**
VERFAHREN UND SYSTEM ZUM ERMÖGLICHEN EINER (NEU-) KONFIGURATION EINES TELEKOMMUNIKATIONSNETZES
PROCÉDÉ ET SYSTÈME PERMETTANT UNE (RE-)CONFIGURATION D'UN RÉSEAU DE TÉLÉCOMMUNICATIONS

(43) Date of publication of application: 24.04.2019
(73) Proprietor: Deutsche Telekom AG, 53113 Bonn (DE)
(72) Inventor: Sobania, Alexander, 53757 Sankt Augustin (DE)
(74) Representative: Raible Deissler Lehmann Patentanwälte PartG mbB

(56) References cited:
- WO-A1-2016/089435
- WO-A1-2016/160848
- US-A1- 2006 023 638
- US-A1- 2016 359 888

## Description

The present invention refers to a method and an appropriate system to maintain, ensure and/or warrant a correct functioning of a telecommunications network.

Both, the method and the system, are based on network data.

Generally, a telecommunications network is a collection of terminal nodes. Links are connected so as to enable telecommunication between the terminal nodes. The transmission links connect the terminal nodes together. The terminal nodes use circuit switching, message switching or packet switching to pass the signal through the correct links and nodes to reach the correct destination terminal node. Each terminal node in the telecommunications network usually has a unique address so messages or connections can be routed to the correct recipients. The collection of addresses in the network is called the address space. Examples of telecommunications networks are computer networks, the Internet, the telephone network, etc.

Transparency of a current status of a telecommunications network is very important and many different data sources are used to identify the current status of the respective network. Once the status of the network changes from a normal to an abnormal behaviour of the network, the respective network operator has to react to avoid outages and impact on servers and/or customers.

Also normal behaviour can cause problems, depending on a situation and a configuration of the underlying network which have to be identified and evaluated.

In a telecommunications network, an event is an action (e.g. a mouse click, keyboard press, a message from another program) or occurrence recognized by software, often originating asynchronously from an external environment that may be handled by the software.

Traditionally, events which are continuously controlled by a central unit within the network via the Simple Network Management Protocol (SNMP) are used to identify problems in the respective network. New big data technologies enable operators to enrich SNMP and also to use logs, KPIs (Key Performance Indicator) and configuration data to identify events. Network data (that means raw data or source data) is rarely used and in case it is used, it is based on predefined KPIs and thresholds for those KPIs. A key performance indicator is a type of performance measurement. Frequently, KPIs evaluate a success of a particular activity, such as a program in which it engages. Each key performance indicator defines a set of values against which is to measure. A log or a log file is a file that records events that occur in an operating system or in other software runs or in messages between different users of a communication software within the network.

However, the telecommunications networks become more dynamic and divergent which makes it harder for an operator to get important information about a status of an underlying telecommunications network and process it. Once problems are identified, an operator has to find a root cause and based on his experience decide how to fix the respective problems to bring the network back into a normal or properly working status. Different virtual network functions solutions expose the data in a variety of formats and encrypt a number of interfaces which make it very difficult for operators to manage their network.

Furthermore, a network topology of a telecommunications network is an important tool for planning operations and for optimization of networks. However, traditionally, topologies are either maintained manually or, in case they are generated automatically, they are limited to specific layers like e.g. layer 3, i.e. the network layer within the 7-layer OSI model of telecommunications networking. Network data from passive probing or traffic capturing which could be used to model topologies was always collected and stored in proprietary products and, therefore, never leveraged to build topologies over several network layers of the 7-layer OSI model.

New big data technologies enable a different approach to deal with the network data and, therefore, could be also used to model topologies combining multiple layers and technology domains.

Concerning the first above-mentioned issue, it is to be stated that manually maintained filters and correlations for SNMP data to highlight an abnormal behaviour in a telecommunications network will become very difficult to maintain in future due to dynamic and divergent networks.

Tools which apply smarter analytics on different data sources like SNMP, logs, KPIs and repository data face the challenge that the traditional data sources are vendor or technology domain specific and require a certain amount of "normalization". Such "normalization" has a lot of disadvantages, e.g. data format consistency, data correlation, data synchronization problems etc., for an operator and makes the data again specific based on the specific based "normalization" definition. Analytics cannot be transferred to other "normalization" layers. Once abnormal behaviour within a network is identified, the respective network operator has to find the root cause based on his own knowledge or based on several sources like e.g. knowledge data bases.

Abnormal behaviour can occur on many layers of the 7-layer OSI model of the respective telecommunications network which makes it sometimes very difficult to identify.

As to the second above-mentioned issue, it is to be further stated that a network topology which is maintained manually is usually limited for specific purposes and only covers relevant nodes of this specific purpose, e.g. IP network planning. Since there are several technology domains and several network layers, a variety of topologies lead to intransparency of the network and high complexity. Changes within a topology are difficult to track and end-to-end trouble shooting is very complex. Network topologies which are generated automatically are focused on certain network layers within the 7 layers of the OSI model and are often generated by actively discovering the network, e.g. through ICMP (Internet Control Message Protocol) messages. Those ICMP messages are most of the time blocked in the telecommunications network for security reasons. Passive probes and traffic capturing is usually applied for a specific use case when the data is stored in a proprietary format. Due to the high throughput in the telecommunications networks, the tools are optimized for the specific use case, and the data is not available for other purposes. Therefore, the diversity of those tools makes it very difficult to extract automatically an underlying topology or to build automatically topologies end-to-end.

US 2006/0023638 A1 describes a proactive network analysis system which encompasses a data stream collector which captures data as packet captures. The traffic analyzer of US 2006/0023638 A1 is characterized in that it can identify for the network administrator what has happened or is happening by revealing unauthorized activity from utilization, traffic patterns and network address space. However, the provided network packet capture data stream collector does not capture raw network data from at least one network function, such as a network component, a network tool, a network interface and/or a network application. Further, no access to such raw network data (source data or atomic data) is provided.

Against this background, it was an object of the present invention to provide a possibility to enable a configuration or a reconfiguration of a telecommunications network by means of generally arising passive network data in order to use those data for topology modelling and/or network automation.

A method with the features of independent claim 1 and a system with the features of independent claim 13 are presented. Further embodiments are indicated in the respective dependent claims and in the following description.

The invention is directed to a method to maintain, ensure and/or warrant a correct/desired functioning of a telecommunications network, the method comprising at least the following steps:
- extracting, capturing and collecting raw network data from at least one network function such as a network component, a network tool, a network interface and/or a network application,
- duplicating the captured raw network data,
- converting the duplicated captured raw network data into a human readable format,
- storing the converted raw network data in a data storage which supports parallel processing and horizontal scaling, and
- making the stored raw network data available through at least one application programming interface for a further deployment as for network automation, particularly with regard to fault detection and reconditioning of the telecommunications network, and for topology modelling of the telecommunications network,
- retrieving via the at least one application programming interface at least a subset of the available raw network data, the subset being dependent on the further deployment, and
- searching the retrieved raw network data for data that are indicative and usable for a specific use case, as for fault detection and/or topology modelling,
- analysing the retrieved raw network data regarding protocol parameters, and
- identifying in the telecommunications network, based on the analysed stored raw network data, at least one root cause of issues disturbing/affecting a current working status of the telecommunications network,
- indicating the identified at least one root cause to an operator of the telecommunications network via a user interface.

The proposed method can be used for a virtualized telecommunications network.

In the context of the present disclosure, the term "configuration" and/or "reconfiguration" refers to any kind of (re-)configuration, maintenance, ensuring and/or warranty of the correct/desired functioning of the telecommunications network.

The term "deployment" covers network automation, particularly with regard to fault detection and reconditioning of the underlying telecommunications network, and topology modelling of the telecommunications network.

The term "deployment specific indicator" refers to those data among the available raw network data that are indicative and usable for a specific use case. In case of topology modelling, there are specific data, such as MAC address and/or IP address of a network component, that are usable to identify a role of said network component within the telecommunications network. In case of fault detection traffic data, for example, can be used to identify a specific fault within the telecommunications network.

According to a further embodiment, the telecommunications network is logically mapped onto a layered network architecture, the layered network architecture comprising at least a network function layer, a conversion layer, a storage layer, and an application layer, the layers being interrelated via respective network interfaces, and wherein the at least one network function is running on the network function layer, the conversion of the duplicated captured raw network data into a human readable format is performed within the conversion layer, and the converted raw network data is stored in the data storage layer, and the stored raw network data are made available on the application layer through the at least one application programming interface for a further deployment as for network automation and for topology modelling of the telecommunications network. Searching the retrieved raw network data for data that are indicative and usable for a specific use case, as for fault detection and/or topology modelling, can be performed in an analysis layer of the layered network architecture.

Raw network data (short: raw data), also called source data or atomic data, is data that has not been processed for use. A distinction is sometimes made between data and information to the effect that information is an end product of data processing. Although raw data has a potential to become information, it requires selective extraction, organization and sometimes analysis and formatting for presentation. Raw data is data which has not undergone any form of transformation or aggregation and still contains base network operations data in its purest form. This is not to say the format of the data may not have changed. Raw data refers to any data object that has not undergone thorough processing, either manually or through automatic computer software. Raw data may be gathered from various processes and IT resources and particularly from a network protocol which generally comprises raw standardized data, particularly within the respective headers of the different OSI layers of the underlying telecommunications network. This captured data can be written into a file with tools like tcpdump. tcpdump is a network analysis tool (packet sniffer). With tcpdump, there is no graphical user interface, but tcpdump is directly started within a console of a computer. It lurks the network traffic and analyses the network packets by extracting, for example IP-addresses/names of the involved servers and displaying services which cause the data/network traffic. tcpdump records the network traffic over an interface and shows/indicates all packets which are transmitted over the network. Therefore, the Ethernet card (i.e. the network interface card) is set in a so-called promiscuous mode. The extracted network data are written in a tcpdump-file and then converted in a human-readable format, i.e. in a human-readable text file. Generally, raw data is primarily unstructured or unformatted repository data which can be in the form of files, visual images, database records or any other digital data.

Generally, a human-readable format is a representation of data or information that can be naturally read by humans. In computing, human-readable data is often encoded as a file rather than presented in a binary representation. JSON (Java Script Object Notation), for example, can be used which is an open-standard file format that uses human-readable text to transmit data objects consisting of attribute-value pairs and array data types or any other serializable value. It is a very common data format used for asynchronous browser-server communication. It is a language-independent data format.

A layered network architecture as proposed by an embodiment of the present method overcomes silos stemming from specific solutions. Within each layer the available functions are mutually exclusive to ensure there is no duplication of functions between layers. Each layer therefore contains a uniquely segregated set of functions.

Likewise, data is not duplicated across layers. Data stored and handled in each layer is distinct from data in all other layers.

According to the proposed method, raw data is extracted, collected, analysed and may be processed and used to draw conclusions, make projections or extract meaningful information. As already indicated, the network components and/or network protocols can be any IT resources or any process within the network. Particularly such network components and/or network tools can be a network interface, a network interface controller and/or any traffic mirroring point. The network data can be captured with tools like tcpdump or specialized hardware which is optimized for high throughput. The software tools can capture the data on the IT resource itself and store it in a file while the hardware requires an additional device to mirror or duplicate the traffic.

A network interface controller, i.e. a network interface card (NIC) is a computer hardware component that connects the computer to a telecommunications network. A network interface controller generally implements an electronic circuitry required to communicate using a specific physical layer and a data link layer standard such as Ethernet, Fibre Channel or WiFi. This provides a base for a full network protocol stack, allowing communication either among small groups of computers on the same local area network or large scale network communications through routable protocols, such as Internet Protocol (IP). A network interface controller allows computers to communicate over a telecommunications network either by using cables or wirelessly. It is both a physical layer and a data link layer device as it provides physical access to a network medium and provides a low level addressing system through the use of MAC (Media Access Control) addresses that are uniquely assigned to network interfaces.

A network interface is generally a system's interface between two pieces of equipment or protocol layers in a telecommunications network. A network interface usually has some form of network address. This may consist of a node ID and a port number, or may be a unique node ID in its own right. Generally, network interfaces provide standardized functions, such as passing messages, connecting and disconnecting, etc. A computer port, for example, is a network interface to other computers or peripherals.

A traffic mirroring point within a telecommunications network is to be understood as a point within the network, e.g. a network switch which is used to send a copy of network packets, seen on one switch port to a network monitoring connection on another switch port. Traffic mirroring points are used for monitoring of network traffic in order, for example, to analyse debug data or diagnose errors on the telecommunications network. Inbound or outbound traffic or both can be mirrored on single or multiple interfaces.

According to an embodiment of the present method, the raw network data are directly provided by the at least one network function via an interface or via means of at least one tracing agent running on a virtual machine, particularly in the above-mentioned network function layer.

According to a further embodiment, the raw network data are captured either via a pull mechanism or via a push mechanism.

The raw data is captured directly from the at least one network function or via means of a tracing agent running on a virtual machine, particularly within the above-mentioned network function layer. While a push mechanism to capture data is seen as most likely, the architecture does not exclude the option for operators to create a pull mechanism. According to a push mechanism, the raw network data are captured and pushed to conversion and storage and finally to analytics tools via at least one API. According to the push mechanism, the duplicated raw network data are (shall be) made available instantaneously. According to a pull mechanism, the raw network data is duplicated and then pulled by a conversion instance, i.e. the conversion layer.

According to the push and the pull mechanism, duplicated raw network data is continuous and not interrupted or delayed prior to been made available to other instances/layers, particularly to an analytics tool.

For the purposes of clarity, the term "raw network data", shortly also called "raw data", covers signaling, routing and such like data. The integrity of data and its "raw" nature at the point of capture is preserved until its storage within the data storage, particularly across the proposed layered network architecture. At no point is collected data modified, augmented or aggregated until its storage within the data storage, particularly across the layers up to the storage layer. Metadata, e.g. time stamping can be associated with the raw network data providing they guarantee the integrity of the captured raw data.

Raw network data can be repackaged. For the purposes of storage and use by applications, data can be decrypted and reformatted. Such processes still preserve the integrity of the original raw data content.

The method comprises the following steps:
- analysing the stored raw network data regarding specific parameters, such as protocol parameters, and
- identifying in the telecommunications network, based on the analysed stored raw network data, at least one root cause of issues disturbing/affecting a current working status of the telecommunications network.

According to a possible embodiment of the proposed method, these method steps are performed within a data processing/analysis layer of the proposed layered architecture.

The capture of raw data takes place through 'passive' means which should not affect network traffic. Data capture occurs only once and is made available to different applications, e.g. analytics. All stored raw data can be used multiple times either simultaneously or at different times by the same or different applications.

Through the use of standard APIs or open APIs, raw data is offered to analytics and other applications. APIs ensure that analytical and other uses of the raw data can work across the entire data storage, i.e. the entire storage layer.

When the telecommunications network is logically mapped onto a layered network architecture as mentioned above, the different layers are defined as follows:
The network function layer is defined as the layer where all network functions are performed. Any network function or other form of software running in this layer on a virtual machine (VM) or in containers makes its data available to a conversion layer. Data to/from the virtual machine is provided either directly by a network function via an interface or by permitting the installation of agents to collect the data from the VM/container.

All network packets which leave or enter the virtual machine are provided up to the conversion layer in a raw format. Where data is encrypted, the network function decrypts it as part of the process. On transfer and storage, data can also still be in an encrypted state.

In order to ensure data is easily transferred, no modification or aggregation takes place. The original data remains in its unmodified state.

The capture of the raw data is 'passive' via duplication. Any malfunction of the duplication process does not affect the production environment.

That means that the proposed method is to use passive network data, i.e. raw network data, to identify "situations" in a telecommunications network.

In the conversion layer, data received from the 'network layer' is converted into a format suitable for storage. This process is done without any modification or aggregation of the original raw data. Metadata can be optionally added at this point.

The conversion layer is able to parse (and therefore understand) all relevant protocols including protocols which have been specifically developed for individual operators' tracing requirements. Conversion is made possible using appropriate tools which are known in the art.

The storage layer is where converted data is stored for subsequent analysis. Preferably, an API is used to move data from the conversion layer to the storage layer. Logically the data storage layer appears like a centralized system and supports parallel processing and horizontal scaling. Physically the data can be stored in a distributed or centralized manner. For efficiency reasons, it is possible that the stored data is indexed.

According to a further embodiment of the proposed method, the layered network architecture further comprises an exposure layer that makes stored data available to the application layer through dedicated APIs. Search and count mechanisms based on the indexed data are available for numerous applications.

Within the application layer, any application can make use of the available 'exposure layer' API for different purposes, e.g. analytics. According to a further embodiment of the proposed method, the layered network architecture further comprises an analytics layer/an analysis layer.

Protocols in e.g. 3GPP (3rd Generation Partnership Project) are standardized and can, therefore, be used to identify abnormalities in a telecommunications network, e.g. call drop rate. Beyond abnormal network behaviour, also normal behaviour can cause issues like, for example, a configuration on a firewall which blocks traffic or a DoS attack. Once identified, those situations/issues can be compared to historical events to identify a respective root cause. Also, protocol standard relevant information could be leveraged to identify such situations/issues.

Situations which operators would define as normal network behaviour, but which are unusual like e.g. DoS, can be identified and highlighted to the network operator as well. DoS means "denial of services", which indicates, that a machine or a network resource is unavailable to its intended users by temporarily or indefinitely disrupting services of a host connected to the Internet. Denial of service is typically accomplished by floating a targeted telecommunications network with a superfluous request in an attempt to overload the telecommunications network.

As situations/issues can be identified when analysing the extracted and collected raw network data regarding specific parameters in different network layers among the layers of the 7-layer OSI model, it is possible to identify in the network at least one root cause of the situations/issues which disturb and/or affect the current working status of the telecommunications network. Once identified, the identified at least one root cause can be indicated to an operator of the network, for example, via a display or any acoustic output device. Once a device is capturing the network traffic, i.e. the network data, it automatically includes all the layers within a packet. For example if a webserver captures http traffic all the OSI layers below are also visible within the packet. The parameters which are considered will depend on the network technology.

Furthermore, according to a further embodiment of the proposed method, the method further comprises the steps:
triggering a workflow engine which contains a library of actions, each action being linked to at least one root cause and usable to bring the network back into a desired working status, and
performing at least one action of the library which is linked to the at least one identified root cause.

That means that it is possible that actions are proposed which can be activated or actions are even triggered automatically which results in a higher degree of automation of the underlying telecommunications network. Those actions can also be proactive actions like request validation from a customer for new network sources. The number of possible actions further comprises, for example, a restart of the telecommunications network, a re-routing of traffic within the telecommunications network when the identified root cause is correlated with the original traffic route, a re-installation of the telecommunications network, etc.

The steps of identifying issues and triggering actions can be applied on all OSI layers (in terms) of the telecommunications network model. Therefore, the proposed method is generic and can be transferred since the raw network data is highly standardized. The above-mentioned approach of normalization can be avoided and the main information of the telecommunications network without vendor or technology dependencies can be leveraged.

According to a further embodiment of the proposed method, the step of identifying in the network the at least one root cause comprises recognizing at least one network message which is indicative for the at least one root cause.

As already mentioned, the network is the main source for the raw network data. The raw network data can be either collected from the network interface, the network interface controller or any traffic mirroring point. The raw network data has to be stored in a human-readable format and made available through APIs. An application programming interface (API) is a set of subroutine definitions, protocols and tools for building application software. Generally, it is a set of clearly defined methods of communication between various software components. An API allows an operator to get access to the extracted and collected raw data. According to the proposed method, the APIs via which raw data are made available, are related to the data storage, i.e. the data storage layer in which the raw data have been stored after having been extracted and collected.

A machine learning module, i.e. a respective algorithm, leverages the raw network data via the API which is related to the data storage. The machine learning module identifies situations/issues in the telecommunications network considering parameters on different layers of the OSI layers. If a root cause can be identified based on the network data information, the machine learning module can trigger a workflow engine which contains a library of actions which are used to bring the telecommunications network in a normal working status again. In case that the telecommunications network is logically mapped onto the before mentioned layered structure, the machine learning module is running, for example, on an analysis layer on top of the application layer.

The proposed method can, for example, be used in the following scenario:
An outage of an HSS (Home Subscriber Server) can have many root causes. It could be, for example, either a communication towards the CNTDB (Common Network Technology Database) which fails, a network failure or the authentication does not work, because the encryption module which is authorizing the SIM (Subscriber Identity Mode) is not working. All different root causes will be visible in the network with different network messages. The network failure could be also due to a problem with an IP router or a misconfigured IP firewall. If a misconfigured firewall is identified, action could be triggered to fix the configuration. In case there are issues with one CNTDB site, the root cause of the CNTDB issues could be evaluated and traffic can be rerouted. An unusual amount of IP sources to a certain IP destination is observed, the traffic towards the IP destination could be blocked from certain links.

For example, if a new traffic source from a white list is visible in the network but not yet configured, a mechanism could be triggered to proactively inform the user about this traffic and require a validation which will trigger a reconfiguration of the white list.

The proposed method will provide a network operator with transparency in his telecommunications network not only focusing on errors, but also consider unusual situations/issues. The data sources for the transparency are dramatically reduced and, therefore, also all the problems of the normalization of the data have been avoided. The proposed method can make use of the most reliable data source and evaluate the situations/issues on all OSI layers. This will enable a new degree of automation for standardized protocols and of the elements using them. Machine learning, i.e. a machine learning module as mentioned above, will enable a wider historical comparison with known issues and can trigger actions to fix those. Downtime of the telecommunications network can be reduced and troubleshooting made much more efficient. Every analytics is developed and the network data can be transferred to any other organization using the same protocols. Only the action in the workflow engine which is coupled with a certain issue which disturbs/affects the current working status of the telecommunications network might vary.

According to a further embodiment, the proposed method further comprises the following step:
Modelling, based on the retrieved, extracted and collected raw network data, a network topology combining multiple protocol layers and technology domains of the telecommunications network.

The proposed method allows to collect the raw network data from the network and to make the raw network data available through APIs to a wider usage. Those data can now be used to build automatically at least one network topology covering multiple protocol layers and technology domains and, therefore, enable a reliable end-to-end view. A combination of different protocol layers and fields in those protocol layers can be used to determine the purpose of a network element, a location and a relation of the network element to other network elements. This can be done in different layers of the OSI model, also in layers higher than layer 3 of the OSI model.

According to a further embodiment of the proposed method, the method further comprises the step of reviewing specific fields from the raw network data which are significant for the underlying network topology. By way of example, at least one of the following items is reviewed thereby: Ethernet information, such as Ethernet MAC addresses, IP information, such as IP addresses, UDP information, geolocation information, GTPv2 information. All packets which are transferred via the network can be searched for LTE identifiers and grouped according to identity/similarity of those located LTE identifiers. Those groups can be further analysed relating to further details, such as IP-addresses, etc.

The method further comprises the steps of:
identifying, from the reviewed fields, roles of the respective network components, such as e.g. Evolved Packet Core (EPC), Mobility Management Entity (MME) or IP Multimedia Subsystem (IMS), Call Session Control Function (CSCF), and
determining, based on the identified roles of the network components and the reviewed fields, the network topology.

For reviewing specific fields from the raw network data, even the used protocols might be enough. If a node is using certain protocols, there is a very high chance that it has a specific functionality.

A topology modelling module is provided which reviews relevant fields from the raw network data on different protocol layers of the 7-layer OSI model and applies algorithms to determine the underlying network topology. Each application or node has to identify the relevant message for itself. This can be done via a single protocol field like global title or a combination of fields like IP address and tcp port. The first step is to identify common patterns in packets like same IP address with same port and global title which is probably indicative for a specific node. By grouping those patterns a first clustering can be done. The same global title can use a different IP address for further communication, so a link between some clusters should be visualized. In general, a combination of supervised and unsupervised learning can provide the results. With supervised learning, the examples will be labelled and with unsupervised learning, clusters will be built automatically.

An example will be given considering LTE evolved packed core (EPC) including the IP backbone. Once messages of the EPC are captured and made available via the storage layer, they contain Ethernet, IP, UDP and GTPv2 information. The Ethernet MAC address is unique and can be used to determine the hardware device. The IP address can be used to determine the role and the relation in an IP network. The IP and/or UDP offers geolocation information which enables the node to be placed in a proper location. An EPC node can have multiple IP addresses and, therefore, the GDPv2 information, e.g. GTPC-TEID, has to be applied to identify the role in the EPC network. Other protocols which are also used within the same context can be identified as the exact role like e.g. MME of a node. On the basis of the identification of the different roles of the different network components, the underlying network topology can be derived.

The proposed method enables an operator of a network to have always an up to date view of the telecommunications network and on layers end-to-end. As already mentioned above, the proposed method offers significant benefits for troubleshooting scenarios where also e.g. firewalls can be made transparent even when the troubleshooting takes place on a GDPv2 layer. The network topology can be correlated with real traffic and historical topologies to identify changes in the telecommunications network. Manual mistakes in inventories and other databases are avoided and maintenance of those is reduced. The proposed method does not depend on active discovery protocols and can be leveraged for planning purposes on all network layers according to the OSI model. Optimization opportunities can be identified quickly and capacity planning can be done with the help of traffic throughput and traffic path visualization.

The present invention also refers to a system to maintain, ensure and/or warrant a correct/desired functioning of a telecommunications network, wherein the system comprises a computer-readable medium with a program code, which is configured, when being executed on a computing unit, to trigger at least the following steps:
- extracting, capturing and collecting raw network data from at least one network function such as a network component, a network tool, a network interface and/or a network application,
- duplicating the captured raw network data,
- converting the duplicated captured raw network data into a human readable format,
- storing the converted raw network data in a data storage which supports parallel processing and horizontal scaling,
- making the stored raw network data available through at least one application programming interface for a further deployment as for network automation with regard to fault detection and reconditioning of the telecommunications network, and for topology modelling of the telecommunications network, and
- retrieving via the at least one application programming interface at least a subset of the available raw network data, the subset being dependent on the further deployment, and
- searching the retrieved raw network data for data that are indicative and usable for fault detection and/or topology modelling,
- analysing the retrieved raw network data regarding protocol parameters, and
- identifying in the telecommunications network, based on the analysed stored raw network data, at least one root cause of issues disturbing/affecting a current working status of the telecommunications network,
- indicating the identified at least one root cause to an operator of the telecommunications network via a user interface.

The system can be used, for example, for a virtualized telecommunications network. According to an embodiment of the proposed system, the telecommunications network is logically mapped onto a layered network, the layered network comprising at least a network function layer, a conversion layer, a storage layer, and an application layer, the layers being interrelated via respective network interfaces wherein the system comprises a computer-readable medium with a program code, which is configured, when being executed on a computing unit, to trigger at least the following steps:
- extracting, capturing and collecting raw network data from at least one network function such as a network component, a network tool, a network interface and/or a network application, wherein the at least one network function is running on the network function layer,
- duplicating the captured raw network data,
- converting the duplicated captured raw network data into a human readable format within the conversion layer,
- storing the converted raw network data in a data storage which supports parallel processing and horizontal scaling,
- making the stored raw network data available on the application layer through at least one application programming interface for a further deployment as for network automation with regard to fault detection and reconditioning of the telecommunications network, and for topology modelling of the telecommunications network, and
- retrieving via the at least one application programming interface at least a subset of the available raw network data, the subset being dependent on the further deployment, and
- searching, in an analysis layer, the retrieved raw network data for data that are indicative and usable for fault detection and/or topology modelling,
- analysing the retrieved raw network data regarding protocol parameters, and
- identifying in the telecommunications network, based on the analysed stored raw network data, at least one root cause of issues disturbing/affecting a current working status of the telecommunications network,
- indicating the identified at least one root cause to an operator of the telecommunications network via a user interface.

Further embodiments of the present invention are described herein, by way of example, in conjunction with the following figures, wherein
- Figure 1: shows a flow chart illustrating a method flow according to various embodiments of the proposed method;
- Figure 2: shows a scenario which can be used when determining a topology of an underlying telecommunications network according to one embodiment of the proposed method.

While several embodiments of the invention are described in conjunction with the figures, it should be apparent that various modifications, alterations and adaptations to those embodiments may occur to a person skilled in the art with the attainment of some or all of the advantages of the present invention. It is therefore intended to cover all such modifications, alterations and adaptations without departing from the scope of the present invention as defined by the appended claims.

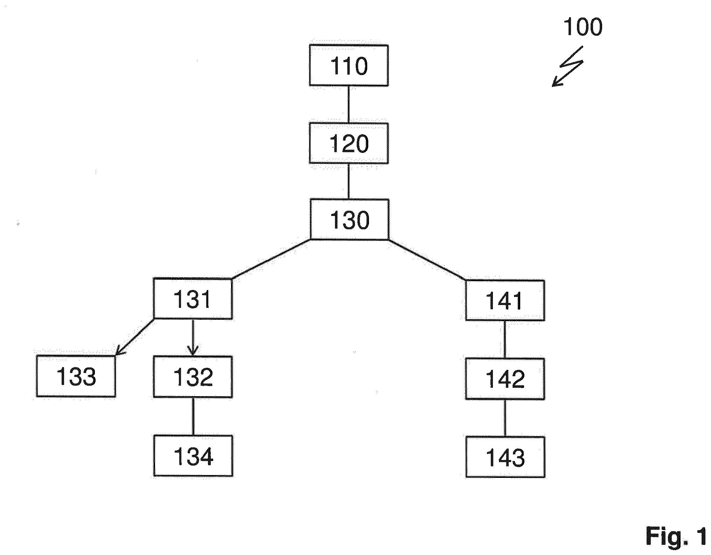

Figure 1 shows a flowchart 100 of possible embodiments of the claimed method.

In a first step 110 raw network data are extracted and collected from at least one network function, such as network components and/or network tools (network protocols) of a telecommunications network. Such network components and/or network tools can be chosen from the group comprising at least a network interface, a network interface controller and/or any traffic mirroring point. A network interface is an interface between two pieces of equipment or protocol layers in the telecommunications network. The network interface usually has some form of network address which can also be chosen as data source for the raw data which are to be extracted and collected. The network address may consist of a node ID and a port number, or it may be a unique node ID in its own right. Network interfaces provide standardized functions, such as passing messages, connecting and disconnecting etc. Also from these standardized functions, raw data can be extracted and used for further deployment. A network interface controller, also known as a network interface card or a network adapter, is a computer hardware component that connects a computer to the telecommunications network. The network interface controller implements the electronic circuit required to communicate using a specific physical layer and a data link layer standard, such as Internet, Fibre Channel or WiFi.

In a further second step 120, the extracted and collected raw network data are duplicated and the duplicated data are stored in a human-readable format like JSON in a data storage layer/library. In a further step 130, the extracted and collected raw network data are made available through at least one application programming interface which is related to the data storage/library. The extracted and collected raw network data are provided via the at least one application programming interface for a further deployment for the (re-)configuration of the telecommunications network. Generally, there are more than one application-programming interfaces which are all related to the data storage and which can provide or offer access to the raw network data which are stored in the data storage/library.

According to one embodiment of the proposed method, the extracted and collected raw network data are retrieved in a further step 131 through the at least one application programming interface. The extracted and collected raw network data are analysed regarding specific key parameters like TCP (Transmission Control Protocol) control bits or GTP (GPRS Tunnelling Protocol) cause codes in different network layers among the seven layers according to the 7-layer OSI model of the underlying telecommunications network. Based on the analysed extracted and collected raw network data, at least one root cause of problems/issues which disturb and/or affect the current working status of the telecommunications network is identified. An abnormal amount of certain GTP cause codes or TCP retransmissions, i.e. TCP control bits, indicates a problem in the network. Or an abnormal high amount of IP source addresses with the same IP destination indicates a DoS attack.

According to a further step 133, the identified at least one root cause is indicated to an operator of the telecommunications network via a display or via any other suitable output device. The output device can also have a visual and/or an acoustic output. In a step 132, it is alternatively to step 133 or supplementary to step 133 possible that a workflow engine which contains or has access to a library of actions, each action being linked with at least one root cause and usable to bring the network back into a desired working station, is triggered so that at least one action of the library which is linked to the at least one identified root cause is automatically performed and realized in a further step 134. Due to the at least one action, the telecommunications network is brought back in its normal working status. According to a possible embodiment, the step of identifying in the telecommunications network the at least one root cause comprises recognizing at least one network message which is indicative for the at least one root cause.

In a further embodiment of the proposed method, specific key fields from the raw network data are reviewed in step 141, wherein the reviewed specific fields are significant for the network topology of the underlying telecommunications network. In step 142, roles of respective network components of the underlying telecommunications network are identified from the reviewed fields and in step 143, a network topology of the underlying telecommunications network is finally determined and derived from the identified roles of the network components.

In order to identify and characterize specific roles of specific network components, at least one of the following items is reviewed:
- Ethernet information, such as Ethernet MAC addresses
- IP information, such as IP addresses
- UDP information
- geolocation information and
- GDPv2 information.

These are only very limited examples, see also list of LTE identifiers. However, the proposed method is not limited to LTE, since all networks use some kind of identifiers.

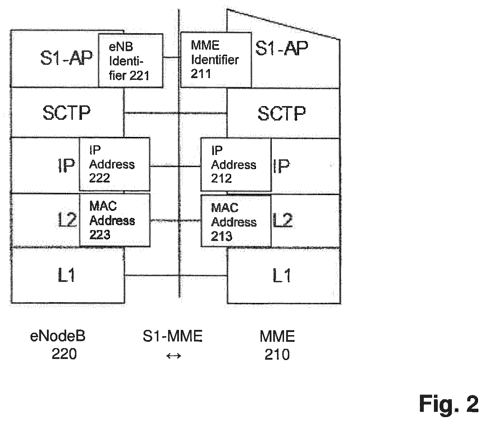

Figure 2 shows an example scenario within a telecommunications network which can be used to determine a topology of the telecommunications network.

If a MME 210 (mobility management entitiy) and an eNodeB 220 (evolved node B) exchange a S1-MME message (a LTE signalling message with application protocol (AP)) as indicated by double arrow, such S1-MME message contains identifiers on multiple OSI layers (Ethernet, IP and S1-AP). It contains a MME identifier 211, an IP address 212 of the MME 210, a MAC address 213 of the MME 210, an eNodeB identifier 221, an IP address 222 of the eNodeB 220 and a MAC address 223 of the eNodeB 220. Every captured packet is a document containing all those information. A simple query to count all documents where MAC, IP and S1-AP identifiers are equal, will provide an overview of the message flow between these two different nodes. In the next step it is requested to list for each S1-AP identifier all the different IP identifiers. This will result in a list with all the IP communication for said certain node.

The following link provides an overview of the LTE identifiers and their usage: https://de.slideshare.net/allabout4g/lte-identifiers. Those LTE identifiers can be used for an identification of different roles of different nodes with the telecommunications system and, thus, for modelling of the topology of the telecommunications network.

Further, the used protocols identify the logical function of the node like e.g. MME or HSS (Home Subscriber Server). Depending on where, i.e. on which OSI layer, the packets have been captured they might be exactly the same on the higher layer but have changes on the lower layer like e.g. MAC address. This indicates that a device has been involved in the communication like e.g. a firewall.

## Claims

1. A method to maintain, ensure and/or warrant a correct/desired functioning of a telecommunications network, the method comprising at least the following steps:
- extracting, capturing and collecting (110) raw network data from at least one network function such as a network component, a network tool, a network interface and/or a network application,
- duplicating (120) the captured raw network data,
- converting (120) the duplicated captured raw network data into a human readable format,
- storing (120) the converted raw network data in a data storage which supports parallel processing and horizontal scaling, and
- making (130) the stored raw network data available through at least one application programming interface for a further deployment as for network automation, particularly with regard to fault detection and reconditioning of the telecommunications network, and for topology modelling of the telecommunications network,
- retrieving via the at least one application programming interface at least a subset of the available raw network data, the subset being dependent on the further deployment, and
- searching the retrieved raw network data for data that are indicative and usable for a specific use case, as for fault detection and/or topology modelling,
- analysing (131) the retrieved raw network data regarding protocol parameters, and
- identifying (131) in the telecommunications network, based on the analysed stored raw network data, at least one root cause of issues disturbing/affecting a current working status of the telecommunications network,
- indicating (133) the identified at least one root cause to an operator of the telecommunications network via a user interface.

2. The method according to claim 1, wherein the raw network data are directly provided by the at least one network function via an interface or via means of at least one tracing agent running on a virtual machine.

3. The method according to claim 1 or 2, wherein the raw network data are captured either via a pull mechanism or via a push mechanism.

4. The method according to claim 1 to 3, wherein the raw network data are extracted and collected from a network interface, a network interface controller and/or any traffic mirroring point of the telecommunications network.

5. The method according to any one of the preceding claims wherein the telecommunications network is logically mapped onto a layered network, the layered network comprising at least a network function layer, a conversion layer, a storage layer, and an application layer, the layers being interrelated via respective network interfaces, and wherein the at least one network function is running on the network function layer, the conversion of the duplicated captured raw network data into a human readable format is performed within the conversion layer, and the converted raw network data is stored in the data storage layer, and the stored raw network data are made available on the application layer through the at least one application programming interface for a further deployment as for network automation and for topology modelling of the telecommunications network.

6. The method according to any one of the preceding claims, further comprising the step:
- triggering (132) a workflow engine which contains a library of actions, each action being linked to at least one root cause and usable to bring the telecommunications network back into a desired working status, and
- performing (132) at least one action of the library which is linked to the at least one identified root cause.

7. The method according to any one of the preceding claims, wherein the step of identifying in the telecommunications network the at least one root cause comprises recognizing at least one network message which is indicative for the at least one root cause.

8. The method according to any one of the claims 1 to 5, further comprising the following steps:
- modelling, based on the retrieved raw network data, a network topology of the telecommunications network by combining multiple protocol layers and technology domains of the telecommunications network.

9. The method according to claim 8, further comprising the following step:
- reviewing (141) specific fields, such as IP address or global title, from the raw network data, which are significant for the network topology,
- identifying (142), from the reviewed fields, roles of respective network components within the telecommunications network; and
- determining (143), based on the identified roles of the network components and the reviewed fields, the network topology of the telecommunications network.

10. The method according to claim 8 or 9, wherein at least one of the following items is reviewed: Ethernet information, such as Ethernet MAC addresses, IP information, such as IP addresses, UDP information, geo location information, GTPv2 information.

11. A system to maintain, ensure and/or warrant a correct/desired functioning of a telecommunications network, wherein the system comprises a computer-readable medium with a program code, which is configured, when being executed on a computing unit, to trigger at least the following steps:
- extracting, capturing and collecting raw network data from at least one network function such as a network component, a network tool, a network interface and/or a network application,
- duplicating the captured raw network data,
- converting the duplicated captured raw network data into a human readable format,
- storing the converted raw network data in a data storage which supports parallel processing and horizontal scaling,
- making the stored raw network data available through at least one application programming interface for a further deployment as for network automation with regard to fault detection and reconditioning of the telecommunications network, and for topology modelling of the telecommunications network, and
- retrieving via the at least one application programming interface at least a subset of the available raw network data, the subset being dependent on the further deployment, and
- searching the retrieved raw network data for data that are indicative and usable for fault detection and/or topology modelling,
- analysing (131) the retrieved raw network data regarding protocol parameters, and
- identifying (131) in the telecommunications network, based on the analysed stored raw network data, at least one root cause of issues disturbing/affecting a current working status of the telecommunications network,
- indicating (133) the identified at least one root cause to an operator of the telecommunications network via a user interface.

12. The system according to claim 11, wherein the telecommunications network is logically mapped onto a layered network, the layered network comprising at least a network function layer, a conversion layer, a storage layer, and an application layer, the layers being interrelated via respective network interfaces, wherein the system comprises a computer-readable medium with a program code, which is configured, when being executed on a computing unit, to trigger at least the following steps:
- extracting, capturing and collecting raw network data from the at least one network function running on the network function layer,
- duplicating the captured raw network data,
- converting the duplicated captured raw network data into a human readable format within the conversion layer,
- storing the converted raw network data in the data storage layer which supports parallel processing and horizontal scaling, and
- making the stored raw network data available on the application layer through the at least one application programming interface for a further deployment as for network automation and for topoplogy modelling of the telecommunications network, and
- retrieving via the at least one application programming interface at least a subset of the available raw network data, the subset being dependent on the further deployment, and
- searching the retrieved raw network data for data that are indicative and usable for fault detection and/or topology modelling,
- analysing (131) the retrieved raw network data regarding protocol parameters, and
- identifying (131) in the telecommunications network, based on the analysed stored raw network data, at least one root cause of issues disturbing/affecting a current working status of the telecommunications network,
- indicating (133) the identified at least one root cause to an operator of the telecommunications network via a user interface.

## Patentansprüche

1. Verfahren für das Aufrechterhalten, Sicherstellen und/oder Gewährleisten eines korrekten/gewünschten Funktionierens eines Telekommunikationsnetzwerkes, wobei das Verfahren mindestens die folgenden Schritte umfasst:
- Extrahieren, Erfassen und Sammeln (110) von Netzwerkrohdaten aus mindestens einer Netzwerkfunktion, wie z. B. einer Netzwerckomponente, einem Netzwerktool, einer Netzwerkschnittstelle und/oder einer Netzwerkanwendung,
- Duplizieren (120) der erfassten Netzwerkrohdaten,
- Konvertieren (120) der duplizierten erfassten Netzwerkrohdaten in ein für den Menschen lesbares Format,
- Speichern (120) der konvertierten Netzwerkrohdaten in einem Datenspeicher, der parallele Verarbeitung und horizontale Skalierung unterstützt, und
- Bereitstellen (130) der gespeicherten Netzwerkrohdaten über mindestens eine Anwendungsprogrammierschnittstelle für eine weitere Bereitstellung, wie z. B. die Netzwerkautomatisierung, insbesondere im Hinblick auf die Fehlererkennung und die Rekonditionierung des Telekommunikationsnetzwerkes, und für die Topologiemodellierung des Telekommunikationsnetzwerkes,
- Abrufen über die mindestens eine Anwendungsprogrammierschnittstelle mindestens einer Teilmenge der verfügbaren Netzwerkrohdaten, wobei die Teilmenge von der weiteren Bereitstellung abhängig ist, und
- Durchsuchen der abgerufenen Netzwerkrohdaten nach Daten, die für einen bestimmten Anwendungsfall, z. B. für die Fehlererkennung und/oder Topologiemodellierung, indikativ und verwendbar sind,
- Analysieren (131) der abgerufenen Netzwerkrohdaten hinsichtlich von Protokollparametern, und
- Identifizieren (131) mindestens einer Grundursache für Probleme im Telekommunikationsnetzwerk, die einen aktuellen Arbeitsstatus des Telekommunikationsnetzwerkes stören/beeinflussen, basierend auf den analysierten gespeicherten Netzwerkrohdaten,
- Anzeigen (133) der identifizierten mindestens einen Grundursache an einen Betreiber des Telekommunikationsnetzwerkes über eine Benutzerschnittstelle.

2. Verfahren nach Anspruch 1, wobei die Netzwerkrohdaten von der mindestens einen Netzwerkfunktion über eine Schnittstelle oder über Mittel mindestens eines Tracing-Agenten, der auf einer virtuellen Maschine läuft, direkt bereitgestellt werden.

3. Verfahren nach Anspruch 1 oder 2, wobei die Netzwerkrohdaten entweder über einen Pull-Mechanismus oder über einen Push-Mechanismus erfasst werden.

4. Verfahren nach den Ansprüchen 1 bis 3, wobei die Netzwerkrohdaten von einer Netzwerkschnittstelle, einem Netzwerkschnittstellen-Controller und/oder einem beliebigen Verkehrsspiegelpunkt des Telekommunikationsnetzwerkes extrahiert und gesammelt werden.

5. Verfahren nach einem der vorhergehenden Ansprüche, wobei das Telekommunikationsnetzwerk logisch auf ein mehrschichtiges Netzwerk abgebildet wird, wobei das mehrschichtige Netzwerk mindestens eine Netzwerkfunktionsschicht, eine Konvertierungsschicht, eine Speicherschicht und eine Anwendungsschicht umfasst, wobei die Schichten über jeweilige Netzwerkschnittstellen miteinander in Beziehung stehen, und wobei die mindestens eine Netzwerkfunktion auf der Netzwerkfunktionsschicht ausgeführt wird, die Konvertierung der duplizierten erfassten Netzwerkrohdaten in ein für Menschen lesbares Format in der Konvertierungsschicht durchgeführt wird, und die konvertierten Netzwerkrohdaten in der Datenspeicherschicht gespeichert werden, und die gespeicherten Netzwerkrohdaten auf der Anwendungsschicht über die mindestens eine Anwendungsprogrammierschnittstelle für einen weiteren Einsatz, wie z. B. die Netzwerkautomatisierung und die Topologiemodellierung des Telekommunikationsnetzwerkes, zur Verfügung gestellt werden.

6. Verfahren nach einem der vorhergehenden Ansprüche, das weiterhin den Schritt umfasst:
- Aktivieren (132) einer Workflow-Engine, die eine Bibliothek von Aktionen enthält, wobei jede Aktion mit mindestens einer Grundursache verknüpft ist und dazu verwendet werden kann, das Telekommunikationsnetzwerk wieder in einen gewünschten Arbeitsstatus zurückzubringen, und
- Durchführen (132) mindestens einer Aktion der Bibliothek, die mit der mindestens einen identifizierten Grundursache verbunden ist.

7. Verfahren nach einem der vorhergehenden Ansprüche, wobei der Schritt des Identifizierens der mindestens einen Grundursache in dem Telekommunikationsnetzwerk das Erkennen mindestens einer Netzwerknachricht umfasst, die für die mindestens eine Grundursache indikativ ist.

8. Verfahren nach einem der Ansprüche 1 bis 5, das weiterhin die folgenden Schritte umfasst:
- Modellieren einer Netzwerktopologie des Telekommunikationsnetzwerkes basierend auf den abgerufenen Netzwerkrohdaten durch Kombinieren mehrerer Protokollschichten und Technologiedomänen des Telekommunikationsnetzwerkes.

9. Verfahren nach Anspruch 8, das weiterhin den folgenden Schritt umfasst:
- Überprüfen (141) spezifischer Felder in den Netzwerkrohdaten, wie z. B. die IP-Adresse oder den globalen Titel, die für die Netzwerktopologie von Bedeutung sind,
- Identifizieren (142) von Rollen der jeweiligen Netzwerkkomponenten innerhalb des Telekommunikationsnetzwerkes aus den überprüften Feldern, und
- Bestimmen (143) der Netzwerktopologie des Telekommunikationsnetzwerkes auf der Grundlage der identifizierten Rollen der Netzwerkkomponenten und der überprüften Felder.

10. Verfahren nach Anspruch 8 oder 9, wobei mindestens einer der folgenden Punkte überprüft wird: Ethernet-Informationen, wie z. B. Ethernet-MAC-Adressen, IP-Informationen, wie z. B. IP-Adressen, UDP-Informationen, Geo-Standortinformationen, GTPv2-Informationen.

11. System für das Aufrechterhalten, Sicherstellen und/oder Gewährleisten eines korrekten/gewünschten Funktionierens eines Telekommunikationsnetzwerkes, wobei das System ein computerlesbares Medium mit einem Programmcode umfasst, der so konfiguriert ist, dass er bei der Ausführung auf einer Recheneinheit mindestens die folgenden Schritte auslöst:
- Extrahieren, Erfassen und Sammeln von Netzwerkrohdaten aus mindestens einer Netzwerkfunktion, wie z. B. eine Netzwerkkomponente, ein Netzwerktool, eine Netzwerkschnittstelle und/oder eine Netzwerkanwendung,
- Duplizieren der erfassten Netzwerkrohdaten,
- Konvertieren der duplizierten erfassten Netzwerkrohdaten in ein für den Menschen lesbares Format,
- Speichern der konvertierten Netzwerkrohdaten in einem Datenspeicher, der parallele Verarbeitung und horizontale Skalierung unterstützt, und
- Bereitstellen der gespeicherten Netzwerkrohdaten über mindestens eine Anwendungsprogrammierschnittstelle für eine weitere Bereitstellung, wie z. B. die Netzwerkautomatisierung, im Hinblick auf die Fehlererkennung und die Rekonditionierung des Telekommunikationsnetzwerkes, und für die Topologiemodellierung des Telekommunikationsnetzwerkes, und
- Abrufen über die mindestens eine Anwendungsprogrammierschnittstelle mindestens einer Teilmenge der verfügbaren Netzwerkrohdaten, wobei die Teilmenge von der weiteren Bereitstellung abhängig ist, und
- Durchsuchen der abgerufenen Netzwerkrohdaten nach Daten, die für die Fehlererkennung und/oder Topologiemodellierung indikativ und verwendbar sind,
- Analysieren (131) der abgerufenen Netzwerkrohdaten hinsichtlich von Protokollparametern, und
- Identifizieren (131) mindestens einer Grundursache für Probleme im Telekommunikationsnetzwerk, die einen aktuellen Arbeitsstatus des Telekommunikationsnetzwerkes stören/beeinflussen, basierend auf den analysierten gespeicherten Netzwerkrohdaten,
- Anzeigen (133) der identifizierten mindestens einen Grundursache an einen Betreiber des Telekommunikationsnetzwerkes über eine Benutzerschnittstelle.

12. System nach Anspruch 11, wobei das Telekommunikationsnetzwerk logisch auf ein mehrschichtiges Netzwerk abgebildet wird, wobei das mehrschichtige Netzwerk mindestens eine Netzwerkfunktionsschicht, eine Konvertierungsschicht, eine Speicherschicht und eine Anwendungsschicht umfasst, wobei die Schichten über jeweilige Netzwerkschnittstellen miteinander in Beziehung stehen, wobei das System ein computerlesbares Medium mit einem Programmcode umfasst, der so konfiguriert ist, dass er bei der Ausführung auf einer Recheneinheit mindestens die folgenden Schritte auslöst:
- Extrahieren, Erfassen und Sammeln von Netzwerkrohdaten aus der mindestens einen Netzwerkfunktion, die auf der Netzwerkfunktionsschicht ausgeführt wird,
- Duplizieren der erfassten Netzwerkrohdaten,
- Konvertieren der duplizierten erfassten Netzwerkrohdaten in ein für den Menschen lesbares Format in der Konvertierungsschicht,
- Speichern der konvertierten Netzwerkrohdaten in der Datenspeicherschicht, die parallele Verarbeitung und horizontale Skalierung unterstützt, und
- Bereitstellen der gespeicherten Netzwerkrohdaten auf der Anwendungsschicht über die mindestens eine Anwendungsprogrammierschnittstelle für einen weiteren Einsatz, wie z. B. die Netzwerkautomatisierung und die Topologiemodellierung des Telekommunikationsnetzwerkes, und
- Abrufen über die mindestens eine Anwendungsprogrammierschnittstelle mindestens einer Teilmenge der verfügbaren Netzwerkrohdaten, wobei die Teilmenge von der weiteren Bereitstellung abhängig ist, und
- Durchsuchen der abgerufenen Netzwerkrohdaten nach Daten, die für die Fehlererkennung und/oder Topologiemodellierung indikativ und verwendbar sind,
- Analysieren (131) der abgerufenen Netzwerkrohdaten hinsichtlich von Protokollparametern, und
- Identifizieren (131) mindestens einer Grundursache für Probleme im Telekommunikationsnetzwerk, die einen aktuellen Arbeitsstatus des Telekommunikationsnetzwerkes stören/beeinflussen, basierend auf den analysierten gespeicherten Netzwerkrohdaten,
- Anzeigen (133) der identifizierten mindestens einen Grundursache an einen Betreiber des Telekommunikationsnetzwerkes über eine Benutzerschnittstelle.

## Revendications

1. Procédé permettant de maintenir, d'assurer et/ou de garantir un fonctionnement correct/souhaité d'un réseau de télécommunications, ledit procédé comprenant au moins les étapes suivantes :
- extraction, enregistrement et collecte (110) de données brutes de réseau provenant d'au moins une fonction de réseau, par exemple, d'un composant de réseau, d'un outil de réseau, d'une interface de réseau et/ou d'une application de réseau,
- duplication (120) des données brutes de réseau enregistrées,
- conversion (120) des données brutes de réseau enregistrées et dupliquées en un format lisible par l'homme,
- stockage (120) des données brutes de réseau converties dans une mémoire supportant un traitement parallèle et une mise à échelle horizontale, et
- mise à disposition (130) des données brutes de réseau stockées par l'intermédiaire d'au moins une interface de programmation d'application pour une mise à disposition ultérieure, par exemple, l'automatisation de réseau, en particulier en vue de la détection des erreurs et du reconditionnement du réseau de télécommunications, et la modélisation topologique du réseau de télécommunications,
- récupération d'au moins un sous-ensemble de données brutes de réseau disponibles par l'intermédiaire d'au moins une interface de programmation d'application, le sous-ensemble étant dépendant de la mise à disposition ultérieure, et
- exploration des données brutes de réseau récupérees pour trouver des données indicatives et utilisables pour une application spécifique déterminée, par exemple, pour la détection des erreurs et/ou la modélisation topologique,
- analyse (131) des données brutes de réseau récupérees par rapport aux paramètres de protocole, et
- identification (131) d'au moins une cause principale de problèmes dans le réseau de télécommunications, qui perturbent/influencent un statut de travail actuel du réseau de télécommunications, sur la base des données brutes de réseau stockées et analysées,
- indication (133) de l'au moins une cause principale identifiée à un opérateur du réseau de télécommunications au moyen d'une interface utilisateur.

2. Procédé selon la revendication 1, dans lequel les données brutes de réseau sont mises à disposition directement par au moins une fonction de réseau par l'intermédiaire d'une interface ou au moyen d'au moins un agent de traçage exécuté sur une machine virtuelle.

3. Procédé selon la revendication 1 ou 2, dans lequel les données brutes de réseau sont enregistrées au moyen d'un mécanisme d'extraction (pull) ou au moyen d'un mécanisme d'introduction (push).

4. Procédé selon les revendications 1 à 3, dans lequel les données brutes de réseau sont extraites et collectées depuis une interface de réseau, un contrôleur d'interfaces de réseau et/ou un quelconque point de mise en miroir du trafic du réseau de télécommunications.

5. Procédé selon l'une des revendications précédentes, dans lequel le réseau de télécommunications est reproduit logiquement sur un réseau multicouches, ledit réseau multicouches comprenant au moins une couche de fonction de réseau, une couche de conversion, une couche de mémoire et une couche d'application, sachant que les couches sont mutuellement liées par des interfaces de réseau correspondantes, que l'au moins une fonction de réseau est exécutée sur la couche de fonction de réseau, que la conversion des données brutes de réseau enregistrées et dupliquées en un format lisible pour l'homme est exécutée dans la couche de conversion, que les données brutes de réseau converties sont stockées sur la couche de mémoire des données et que les données brutes de réseau stockées sont mises à disposition sur la couche d'application par l'intermédiaire de l'au moins une interface de programmation d'application pour une utilisation ultérieure, par exemple, l'automatisation du réseau et la modélisation topologique du réseau de télécommunications.

6. Procédé selon l'une des revendications précédentes, comprenant également les étapes suivantes :
- activation (132) d'un moteur de workflow contenant une bibliothèque d'actions, sachant que chaque action est liée à au moins une cause principale et peut être utilisée pour ramener le réseau de télécommunications à un état de travail souhaité, et
- exécution (132) d'au moins une action de la bibliothèque liée à l'au moins une cause principale identifiée.

7. Procédé selon l'une des revendications précédentes, dans lequel l'étape de l'identification de l'au moins une cause principale dans le réseau de télécommunications comprend la détection d'au moins un message de réseau qui indique l'au moins une cause principale.

8. Procédé selon l'une des revendications 1 à 5, comprenant également l'étape suivante :
- modélisation d'une topologie de réseau du réseau de télécommunications sur la base des données brutes de réseau récupérées moyennant la combinaison de plusieurs couches de protocole et domaines technologiques du réseau de télécommunications.

9. Procédé selon la revendication 8, comprenant également les étapes suivantes :
- vérification (141) de champs spécifiques dans les données brutes de réseau, par exemple, l'adresse IP ou le titre global, qui sont importants pour la topologie du réseau,
- identification (142) des rôles des composants de réseau correspondants dans le réseau de télécommunications à partir des champs vérifiés, et
- détermination (143) de la topologie du réseau de télécommunications sur la base des rôles identifiés des composants de réseau et des champs vérifiés.

10. Procédé selon la revendication 8 ou 9, dans lequel au moins un des points suivants est vérifié : informations Ethernet, par exemple, adresses MAC Ethernet, informations IP, par exemple, adresses IP, informations UDP, informations de géolocalisation, informations GTPv2.

11. Système permettant de maintenir, d'assurer et/ou de garantir un fonctionnement correct/souhaité d'un réseau de télécommunications, ledit système comprenant un support lisible par ordinateur contenant un code de programmation configuré de manière à déclencher au moins les étapes suivantes lors de l'exécution sur une unité de calcul :
- extraction, enregistrement et collecte de données brutes de réseau provenant d'au moins une fonction de réseau, par exemple, d'un composant de réseau, d'un outil de réseau, d'une interface de réseau et/ou d'une application de réseau,
- duplication des données brutes de réseau enregistrées,
- conversion des données brutes de réseau enregistrées et dupliquées en un format lisible par l'homme,
- stockage des données brutes de réseau converties dans une mémoire supportant un traitement parallèle et une mise à échelle horizontale, et
- mise à disposition des données brutes de réseau stockées par l'intermédiaire d'au moins une interface de programmation d'application pour une mise à disposition ultérieure, par exemple, l'automatisation de réseau, en vue de la détection des erreurs et du reconditionnement du réseau de télécommunications, et la modélisation topologique du réseau de télécommunications, et
- récupération d'au moins un sous-ensemble de données brutes de réseau disponibles par l'intermédiaire d'au moins une interface de programmation d'application, le sous-ensemble étant dépendant de la mise à disposition ultérieure, et
- exploration des données brutes de réseau récupérées pour trouver des données indicatives et utilisables pour la détection des erreurs et/ou la modélisation topologique,
- analyse (131) des données brutes de réseau récupérées par rapport aux paramètres de protocole, et
- identification (131) d'au moins une cause principale de problèmes dans le réseau de télécommunications, qui perturbent/influencent un statut de travail actuel du réseau de télécommunications, sur la base des données brutes de réseau stockées et analysées,
- indication (133) de l'au moins une cause principale identifiée à un opérateur du réseau de télécommunications au moyen d'une interface utilisateur.

12. Système selon la revendication 11, dans lequel le réseau de télécommunications est logiquement reproduit sur un réseau multicouches, ledit réseau multicouches comprenant au moins une couche de fonction de réseau, une couche de conversion, une couche de mémoire et une couche d'application, sachant que les couches sont mutuellement liées par des interfaces de réseau correspondantes, que le système comprend un support lisible par ordinateur contenant un code de programmation configuré de manière à déclencher au moins les étapes suivantes lors de l'exécution sur une unité de calcul :
- extraction, enregistrement et collecte de données brutes de réseau provenant d'au moins une fonction de réseau exécutée sur la couche de fonction de réseau,
- duplication des données brutes de réseau enregistrées,
- conversion des données brutes de réseau enregistrées et dupliquées en un format lisible par l'homme dans la couche de conversion,
- stockage des données brutes de réseau converties dans la couche de mémoire des données supportant un traitement parallèle et une mise à échelle horizontale, et
- mise à disposition des données brutes de réseau stockées sur la couche d'application par l'intermédiaire d'au moins une interface de programmation d'application pour une utilisation ultérieure, par exemple, l'automatisation du réseau et la modélisation topologique du réseau de télécommunications, et
- récupération d'au moins un sous-ensemble de données brutes de réseau disponibles par l'intermédiaire d'au moins une interface de programmation d'application, le sous-ensemble étant dépendant de la mise à disposition ultérieure, et
- exploration des données brutes de réseau récupérées pour trouver des données indicatives et utilisables pour la détection des erreurs et/ou la modélisation topologique,
- analyse (131) des données brutes de réseau récupérées par rapport aux paramètres de protocole, et
- identification (131) d'au moins une cause principale de problèmes dans le réseau de télécommunications, qui perturbent/influencent un statut de travail actuel du réseau de télécommunications, sur la base des données brutes de réseau stockées et analysées,
- indication (133) de l'au moins une cause principale identifiée à un opérateur du réseau de télécommunications au moyen d'une interface utilisateur.
